# EUROPÄISCHE PATENTSCHRIFT

(11) **EP 1 051 360 B1**
(45) Veröffentlichungstag und Bekanntmachung des Hinweises auf die Patenterteilung: **07.08.2002**
(21) Anmeldenummer: 99906172.4
(22) Anmeldetag: 20.01.1999
(51) Int. Cl.: C02F 1/56, C09D 7/00

(54) **VERFAHREN ZUM AUFBEREITEN VON UMLAUFWASSER AUS EINER LACKIERANLAGE**
METHOD FOR TREATING CIRCULATING WATER FROM A PAINT SHOP
PROCEDE DE TRAITEMENT D'EAU DE CIRCULATION PROVENANT D'UNE INSTALLATION DE MISE EN PEINTURE

(30) Priorität: 28.01.1998 AT 14098
(43) Veröffentlichungstag der Anmeldung: 15.11.2000
(73) Patentinhaber: Aware Chemicals L.L.C, Miami, FL 33129 (US)
(72) Erfinder: BOHNES, Dirk, D-50171 Kerpen (DE); LINDEMANN, Johannes, D-53619 Rheinbreitbach Rolandsmühle (DE); MANDERSCHEID, Karl, D-50935 Köln (DE)
(74) Vertreter: Wacker, Manfred, Dr.
(86) Internationale Anmeldenummer: EP9900350
(87) Internationale Veröffentlichungsnummer: WO9938808

(56) Entgegenhaltungen:
- EP-A- 0 474 869
- EP-A- 0 692 459
- US-A- 5 284 512

## Beschreibung

Die Erfindung bezieht sich auf ein Verfahren zum Aufbereiten von Umlaufwasser aus einer Lackieranlage, aus dem der aus der Abluft der Lackieranlage ausgewaschene Lack zumindest fallweise abgetrennt wird.

Um den in Lackieranlagen anfallenden Überschuß an eingesetztem Lack, der mit der Abluft aus der Lackierkabine ausgetragen und aus der Abluft ausgewaschen wird, wiedergewinnen zu können, ist es bekannt (EP 0 675 080 A2), das mit dem Lack beladene Waschwasser einer mehrstufigen Membranfiltration zu unterwerfen. Zufolge dieser Membranfiltration entspricht der abgetrennte Lack hinsichtlich seiner Zusammensetzung und seiner Konzentration weitgehend dem in dieser bekannten Lackieranlage eingesetzten Wasserlack, während das gereinigte Wasser der Lackieranlage in einem Kreislauf wieder zugeführt wird, so daß sich im wesentlichen ein Wasserumlauf über die Membranfiltration ergibt. Nachteilig bei diesem bekannten Verfahren zur Abtrennung des ausgewaschenen Überschußlackes aus dem Umlaufwasser ist jedoch, daß die Lackteilchen zum Verkleben neigen und dann aushärten. Dies führt dazu, daß sich mit dem Umlaufwasser geförderte Lackteile an den Rohrleitungen und Pumpen ablagern, was im Laufe der Zeit zu einer Verblockung der Rohrleitungen und Pumpen führen kann. In ähnlicher Weise kommt es auch zu Lackablagerungen im Bereich des Abluftsystems der Lackieranlage, so daß wegen der Lackablagerungen nicht nur ein vergleichsweise hoher Wartungsaufwand erforderlich wird, sondern auch mit Betriebsstörungen gerechnet werden muß. Außerdem kann es zu einem erhöhten Lackverbrauch und allenfalls zu Qualitätseinbußen kommen.

Um das Verkleben von Lackteilchen zu vermeiden, können Koagulierungsmittel eingesetzt werden. Diese Koagulierungsmittel, die aus einem Wachs, aus einem Polyelektrolyten oder einem Tonerdeprodukt bestehen, werden jedoch mit dem Lack ausgefiltert, was eine kontinuierliche Zuführung der eingesetzten Koagulierungsmittel in einer erheblichen Konzentration erfordert. Trotz des Einsatzes von Koagulierungsmitteln kann jedoch die Ablagerung von Lackteilchen und Koagulatresten nicht verhindert werden.

Der Erfindung liegt somit die Aufgabe zugrunde, ein Verfahren zum Aufbereiten von Umlaufwasser aus Lackieranlagen der eingangs geschilderten Art so auszugestalten, daß ein Verkleben der Lackteilchen sicher vermieden und dadurch ein wartungsarmer, wenig störanfälliger Betrieb gewährleistet werden kann.

Die Erfindung löst die gestellte Aufgabe dadurch, daß dem Umlaufwasser Polyasparaginsäure zugemischt wird.

Der neue Einsatz von Polyasparaginsäure, die in bekannter Weise hergestellt wird (DE 43 05 368 A1, DE 43 06 412 A1, DE 43 10 503 A1, DE 43 23 191 A1, DE 44 27 233 A1, DE 44 28 639 A1) und sonst vor allem als Zusatz für Wasch- und Reinigungsmittel dient, verhindert in überraschender Weise das Verkleben der Lackteilchen, so daß es zu keinen Ablagerungen oder Verklebungen in den Rohrleitungen, Pumpen oder in anderen Anlageteilen kommt, die mit dem lackbelasteten Umlaufwasser in Berührung gelangen. Da außerdem die Polyasparaginsäure im Wasser gelöst bleibt und daher mit dem Umlaufwasser im Kreislauf geführt wird, braucht lediglich der Verlust an Polyasparaginsäure ersetzt zu werden, der durch die Wasserverdunstung bzw. durch den geringfügigen, mit dem Lack abgetrennten Wasseranteil bedingt wird. Es braucht wohl nicht besonders hervorgehoben zu werden, daß mit der Polyasparaginsäure gegebenenfalls erforderliche Hilfsmittel, wie Lösungsvermittler, Netzmittel, Korrosionsschutzmittel oder Biozide sowie insbesondere bei Wasserlacken auch Entschäumer, dem Umlaufwasser beigefügt werden können.

Vorzugsweise setzt man die Polyasparaginsäure in Form einer wäßrigen Lösung eines Alkalimetall- oder Ammoniumsalzes der Polyasparaginsäure dem Umlaufwasser zu. Beispielsweise kann hierfür eine 40 Gew.-%ige Lösung des Natriumsalzes der Polyasparaginsäure verwendet werden, die man vorzugsweise in einer Menge von 0,5 bis 5 Vol-% dem Umlaufwasser zugibt.

Besonders vorteilhafte Verfahrensbedingungen ergeben sich, wenn die Konzentration der Polyasparaginsäure im Umlaufwasser konstant gehalten wird, indem die Kreislaufverluste entsprechend ergänzt werden. Wie sich in der Praxis gezeigt hat, kann ein Anteil der Polyasparaginsäure von 2 - 5 Vol.% am Umlaufwasser den üblichen Anforderungen vorteilhaft entsprechen. Mit einer solchen Konzentration der Polyasparaginsäure kann das Verkleben von Lackteilchen bis zu einer Lackbeladung des Umlaufwassers von 10 Vol.% und darüber ohne weiteres wirksam unterbunden werden. Im Bedarfsfall kann die Polyasparaginsäurekonzentration an die jeweilige Lackbelastung des Umlaufwassers angepaßt werden.

Insbesondere bei der Abtrennung von lösungsmittelbasierten Lacken, aber gegebenenfalls auch bei wasserbasierten Lacken ("Wasserlacken"), ist es empfehlenswert, dem Umlaufwasser zusätzlich zu der Polyasparaginsäure eines oder mehrere anionische Tenside zuzusetzen. Diese können beispielsweise ausgewählt sein aus Alkylsulfaten, Alkylsulfonaten, Alkylbenzolsulfaten und Alkylethersulfaten. Alkylsulfonate sind besonders bevorzugt.

Die anionischen Tenside setzt man dem Umlaufwasser vorzugsweise in einer Menge zwischen etwa 0,02 und 0,75 Gew.-% bezogen auf das Umlaufwasser zu. Bei wasserbasierten Lacken sind Zusätze von anionischen Tensiden im unteren Konzentrationsbereich, beispielsweise zwischen etwa 0,02 und etwa 0,35 Gew.-% ausreichend, während für lösungsmittelbasierte Lacke Mengen von etwa 0,05 bis etwa 0,75 Gew.-% bevorzugt werden.

In einem weiteren Aspekt betrifft die Erfindung ein Mittel, das für die Durchführung des erfindungsgemäßen Verfahrens eingesetzt werden kann. Dieses Mittel enthält sowohl Polyasparaginsäure oder ihr Alkalimetall- oder Ammoniumsalz, beispielsweise ihr Natriumsalz, als auch eines oder mehrere anionische Tenside. Das Gewichtsverhältnis a) Polyasparaginsäure oder deren Alkalimetall- oder Ammoniumsalz und b) eines oder mehrere anionische Tenside liegt vorzugsweise in einem Bereich a : b zwischen 4 : 1 und 20 : 1. Bei der Verwendung des Mittel für wasserbasierte Lacke ist ein Gewichtsverhältnis im Bereich 10 : 1 und 20 : 1, bei Verwendung für lösemittelbasierte Lacke ein Gewichtsverhältnis zwischen 4 : 1 und 10 : 1 bevorzugt. Dabei kann das Mittel nur aus den beiden Komponenten a) und b) bestehen. Es kann sich jedoch auch um eine Lösung, vorzugsweise eine wäßrige Lösung, der Komponenten a) und b) im angegebenen Mengenverhältnis handeln. In diesem Mittel können die anionischen Tenside beispielsweise ausgewählt sein aus Alkylsulfaten, Alkylsulfonaten, Alkylbenzolsulfaten und Alkylethersulfaten. Alkylsulfonate sind besonders bevorzugt. Weiterhin kann das Mittel enthalten: Lösungsvermittler, Netzmittel, Korrosionsschutzmittel oder Biozide sowie insbesondere bei Wasserlacken auch Entschäumer.

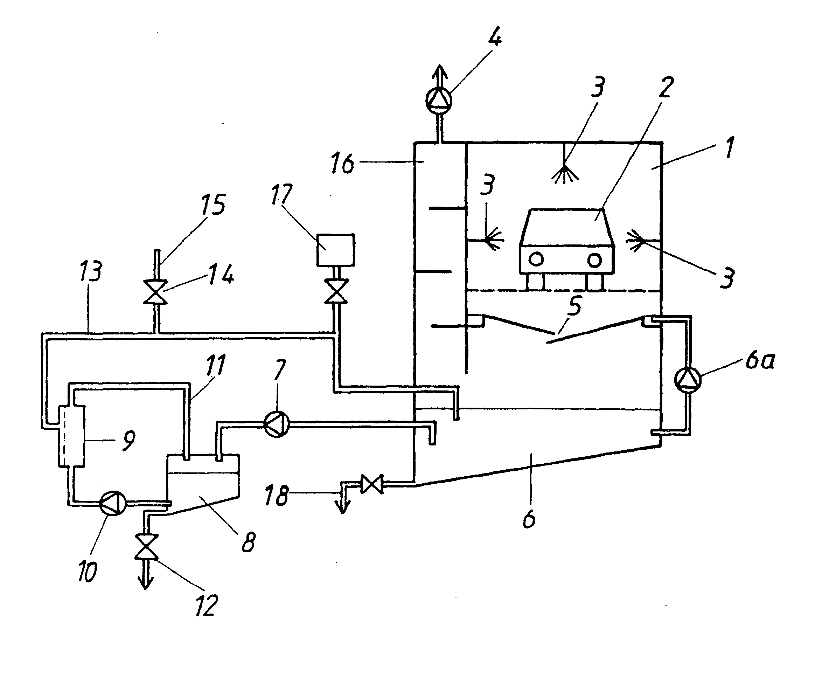

Anhand der Zeichnung wird das erfindungsgemäße Verfahren näher erläutert, die eine Anlage zum Aufbereiten von Umlaufwasser aus einer Lackieranlage in einem schematischen Blockschaltbild zeigt.

In der Lackieranlage 1 wird ein zu lackierender Gegenstand 2 mit Hilfe von Sprühdüsen 3 lackiert. Der versprühte, nicht auf den Gegenstand 2 abgeschiedene Überschuß an eingesetztem Lack wird mit Hilfe eines Sauglüfters 4 aus der Lackieranlage 1 abgesaugt und mit Hilfe von Waschwasser aus der abgesaugten Luft ausgewaschen. Zu diesem Zweck strömt über den Absaugschlitz 5 ein Wasserfilm, der durch den Unterdruck und die dadurch bedingte Abluftströmung in feine Tröpfchen zerteilt wird. Der dadurch entstehende Wassernebel dient zum Auswaschen der mit der Abluft aus der Lackieranlage 1 ausgetragenen Lackteilchen, die mit den vom Luftstrom mitgerissenen Wasserteilchen über Abschlagbleche oder Tropfenabscheider aus der Abluft abgeschieden und in einem Behälter 6 gesammelt werden, aus dem die abgeschiedene Flüssigkeit über eine Pumpe 6a wieder dem Absaugschlitz im Kreislauf zugeführt wird. Vom Behälter 6 wird das lackbeladene Waschwasser mit Hilfe einer Pumpe 7 einem Konzentratbehälter 8 zugefördert, aus dem das Wasser-Lackgemisch einer Trenneinrichtung 9, beispielsweise einer einoder mehrstufigen Membranfiltration über eine Pumpe 10 zugefördert wird. Die in der Trenneinrichtung 9 zurückgehaltenen Lackanteile werden über eine Rückleitung 11 in den Konzentratbehälter 8 zurückgeführt, so daß im Konzentratbehälter 8 der Lackanteil aufkonzentriert wird, bis nach dem Erreichen einer bestimmten Lackkonzentration das Konzentrat über ein Ablaufventil 12 aus dem Konzentratbehälter 8 abgezogen wird.

Das in der Trenneinrichtung 9 vom Lackanteil weitgehend gereinigte Waschwasser gelangt als Umlaufwasser wieder in den Behälter 6. In die Rückleitung 13 für das gereinigte Umlaufwasser mündet über ein Ventil 14 eine Anschlußleitung 15 für Zusatzwasser, um im Kreislauf auftretende Wasserverluste ausgleichen zu können. Solche Wasserverluste entstehen bei einem Konzentrataustrag über das Ablaufventil 12 oder durch Verdunstung. Über das an den Sauglüfter 4 angeschlossene Abluftsystem 16 der Lackieranlage 1 wird nämlich auch verdunstete Waschflüssigkeit abgezogen.

Alternativ zu einer Membranfiltration können die Lackpartikel auch auf mechanischem Wege vom Waschwasser abgetrennt werden, beispielsweise durch eine kontinuierlich oder diskontinuierlich laufende Zentrifuge oder einen Separator.

Um ein Verkleben der Lackteilchen und eine dadurch bedingte Ablagerung von Lackresten in den Rohrleitungen und Pumpen bzw. im Abluftsystem 16 zu vermeiden, wird dem Umlaufwasser Polyasparaginsäure zugemischt, und zwar in einer Konzentration von vorzugsweise 2 - 5 Vol.%. Dieser Polyasparaginsäureanteil unterbindet in sehr wirksamer Weise das Verkleben der Lackteilchen, so daß Ablagerungen von Lackteilchen in mit dem Wasch- bzw. Umlaufwasser in Berührung kommenden Anlageteilen vermieden werden. Da die zugemischte Polyasparaginsäure im Wasser gelöst ist, wird sie mit dem Umlaufwasser im Kreislauf geführt und braucht lediglich im Rahmen der Wasserverluste nachgefüllt zu werden. Zu diesem Zweck ist eine Dosiereinrichtung 17 vorgesehen, über die die Polyasparaginsäure entsprechend der jeweils zu ersetzenden Menge in die Rückleitung 13 für das gereinigte Umlaufwasser eingeleitet wird. Werden dem Umlaufwasser Zusatzmittel, beispielsweise Lösungsvermittler, Netzmittel, Korrosionsschutzmittel oder Biozide zugemischt, so ist selbstverständlich für eine entsprechende Ergänzung auch dieser Zusatzmittel zu sorgen.

Durch die geschilderten Maßnahmen kann in einfacher Weise eine weitgehend konstante Konzentration der Polyasparaginsäure aufrechterhalten werden, was sich für die angestrebte Wirkung als vorteilhaft erwiesen hat. Durch das Zumischen von Polyasparaginsäure zum Umlaufwasser können die eingesetzten Lacke je nach ihren Eigenschaften vorteilhaft flotiert, sedimentiert oder dispergiert werden, was im Zusammenhang beispielsweise einer Lackabtrennung durch ein Absetzen oder Zentrifugieren bzw. durch eine Membranfiltration von wesentlicher Bedeutung ist.

Der Vollständigkeit halber sei noch erwähnt, daß der Behälter 6 bei Bedarf über eine Leitung 18 entleert werden kann. Außerdem kann dem Behälter 6 ein weiterer Behälter als Pumpenvorlage nachgeschaltet werden. Schließlich ist festzuhalten, daß der Lackanteil nicht nur kontinuierlich, sondern auch fallweise in zeitlichen Intervallen aus dem Umlaufwasser abgetrennt werden kann, wenn eine bestimmte Lackkonzentration erreicht ist

## Patentansprüche

1. Verfahren zum Aufbereiten von Umlaufwasser aus einer Lackieranlage, aus dem der aus der Abluft der Lackieranlage ausgewaschene Lack zumindest fallweise abgetrennt wird, **dadurch gekennzeichnet, daß** dem Umlaufwasser Polyasparaginsäure zugemischt wird.

2. Verfahren nach Anspruch 1, **dadurch gekennzeichnet, daß** die Konzentration der Polyasparaginsäure im Umlaufwasser konstant gehalten wird.

3. Verfahren nach Anspruch 1 oder 2, **dadurch gekennzeichnet, daß** die Polyasparaginsäure dem Umlaufwasser in einer Menge von 0,5 bis 5 Vol.% bezogen auf eine 40 Gew.-%ige wäßrige Lösung des Na-Salzes zugemischt wird.

4. Verfahren nach einem oder mehreren der Ansprüche 1 bis 3, **dadurch gekennzeichnet, daß** die Polyasparaginsäure dem Umlaufwasser in einer Menge von 2 bis 5 Vol.% zugemischt wird.

5. Verfahren nach einem oder mehreren der Ansprüche 1 bis 4, **dadurch gekennzeichnet, daß** dem Umlaufwasser zusätzlich anionische Tenside zugesetzt werden.

6. Verfahren nach Anspruch 5, **dadurch gekennzeichnet, daß** die anionischen Tenside ausgewählt sind aus Alkylsulfaten, Alkylsulfonaten, Alkylbenzolsulfonaten und Alkylethersulfaten.

7. Verfahren nach Anspruch 5 oder 6, **dadurch gekennzeichnet, daß** die anionischen Tenside dem Umlaufwasser in einer Menge zwischen 0,02 und 0,75 Gew.% bezogen auf das Umlaufwasser zugesetzt werden.

8. Mittel zur Verwendung in einem Verfahren nach einem oder mehreren der Ansprüche 1 bis 7, enthaltend
a) Polyasparaginsäure oder deren Alkalimetall- oder Ammoniumsalz und
b) eines oder mehrere anionische Tenside
in einem Gewichtsverhältnis a :b zwischen 4 : 1 und 20 : 1

9. Mittel nach Anspruch 8, **dadurch gekennzeichnet, daß** die anionischen Tenside ausgewählt sind aus Alkylsulfaten, Alkylsulfonaten, Alkylbenzolsulfonaten und Alkylethersulfaten.

## Claims

1. A process for treating circuit water from a paint shop from which the paint washed out from the waste air of the paint shop is at least periodically removed, **characterized in that** polyaspartic acid is added to the circuit water.

2. A process as claimed in claim 1, **characterized in that** the concentration of polyaspartic acid in the circuit water is kept constant.

3. A process as claimed in claim 1 or 2, **characterized in that** the polyaspartic acid is added to the circuit water in a quantity of 0.5 to 5% by volume, based on a 40% by weight aqueous solution of the Na salt.

4. A process as claimed in one or more of claims 1 to 3, **characterized in that** the polyaspartic acid is added to the circuit water in a quantity of 2 to 5% by volume.

5. A process as claimed in one or more of claims 1 to 4, **characterized in that** anionic surfactants are also added to the circuit water.

6. A process as claimed in claim 5, **characterized in that** the anionic surfactants are selected from alkyl sulfates, alkyl sulfonates, alkyl benzenesulfonates and alkyl ether sulfates.

7. A process as claimed in claim 5 or 6, **characterized in that** the anionic surfactants are added to the circuit water in a quantity of 0.02 to 0.75% by weight, based on the circuit water.

8. A composition for use in the process claimed in one or more of claims 1 to 7 containing a) polyaspartic acid or an alkali metal or ammonium salt thereof and b) one or more anionic surfactants in a ratio by weight of a:b of 4:1 to 20:1.

9. A composition as claimed in claim 8, **characterized in that** the anionic surfactants are selected from alkyl sulfates, alkyl sulfonates, alkyl benzenesulfonates and alkyl ether sulfates.

## Revendications

1. Procédé de traitement d'eau de circulation provenant d'une installation de mise en peinture dans laquelle, au moins s'il y a lieu, on sépare de cette eau la peinture extraite par lavage de l'air sortant de l'installation,
**caractérisée en ce qu'**
on mélange à l'eau de circulation de l'acide polyaspartique.

2. Procédé selon la revendication 1,
**caractérisé en ce que**
la concentration de l'acide polyaspartique dans l'eau de circulation est maintenue constante.

3. Procédé selon l'une quelconque des revendications 1 ou 2,
**caractérisé en ce que**
l'acide polyaspartique est mélangé à l'eau de circulation dans la proportion de 0,5 à 5 % en volume, rapportée à une solution à 40 % en poids du sel de sodium.

4. Procédé selon l'une quelconque des revendications 1 à 3,
**caractérisé en ce que**
l'acide polyaspartique est mélangé à l'eau de circulation dans la proportion de 2 à 5 % en volume.

5. Procédé selon l'une quelconque des revendications 1 à 4,
**caractérisé en ce qu'**
à l'eau de circulation sont ajoutés en plus des tensioactifs anioniques.

6. Procédé selon la revendication 5,
**caractérisé en ce que**
les tensioactifs anioniques sont choisis parmi les sulfates d'alkyle, les sulfonates d'alkyle, les benzènesulfonates d'alkyle et les éthersulfonates d'alkyle.

7. Procédé selon l'une quelconque des revendications 5 ou 6,
**caractérisé en ce que**
les tensioactifs anioniques sont ajoutés à l'eau de circulation dans la proportion de 0,02 à 0,75 % en poids.

8. Agent qui peut être utilisé pour la mise en oevre du
procédé selon l'une quelconque des revendications 1 à 7, contenant :
a) de l'acide polyaspartique ou son sel de métal alcalin ou d'ammonium et
b) un ou plusieurs tensioactifs anioniques, avec un rapport pondéral a:b compris entre 4:1 et 20:1.

9. Agent selon la revendication 8,
**caractérisé en ce que**
les tensioactifs anioniques sont choisis parmi les sulfates d'alkyle, les sulfonates d'alkyle, les benzènesulfonates d'alkyle et les éthersulfonates d'alkyle.
